**Europäisches Patentamt**

**European Patent Office**

**Office européen des brevets**

(19)

(11) Veröffentlichungsnummer: **0 038 402**
**B1**

(12) **EUROPÄISCHE PATENTSCHRIFT**

(45) Veröffentlichungstag der Patentschrift: **19.12.84**

(21) Anmeldenummer: **81100912.5**

(22) Anmeldetag: **10.02.81**

(51) Int. Cl.$^3$: **C 02 F 1/78**, B 01 J 21/08,
B 01 J 37/02

(54) Verfahren zum Herstellen von Katalysatoren für die Oxidation organischer Stoffe durch Ozon.

(30) Priorität: **11.04.80 DE 3013905**

(43) Veröffentlichungstag der Anmeldung:
**28.10.81 Patentblatt 81/43**

(45) Bekanntmachung des Hinweises auf die
Patenterteilung:
**19.12.84 Patentblatt 84/51**

(84) Benannte Vertragsstaaten:
**BE CH DE FR GB LI SE**

(56) Entgegenhaltungen:
**DE-A-2 440 181**
**DE-A-2 511 344**
**DE-A-2 647 341**
**FR-A-1 073 404**
**US-A-2 722 504**

(73) Patentinhaber: GKSS-Forschungszentrum
Geesthacht GmbH
Reaktorstrasse 7-9
D-2054 Geesthacht-Tesperhude (DE)

(72) Erfinder: Müller, Heinz Joachim
Blumenstrasse 8
D-3141 Tespe (DE)
Erfinder: Reinhardt, Karl Horst, Dr. Dipl.-Chem.
Hamburger Strasse 29
D-2057 Reinbek (DE)

(74) Vertreter: Schöning, Hans-Werner, Dipl.-Ing.
Adenauerallee 28 (Postfach 102 905)
D-2000 Hamburg 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zum Herstellen von Katalysatoren für die Oxidation organischer Stoffe durch Ozon, insbesondere für die Ozonung von Abwasser mit organischen Verunreinigungen.

Ozon wird in der Wassertechnik zur Desinfektion und zur oxidativen Veränderung von Schadstoffen, bis hin zum vollständigen Abbau verwendet. In der Abwasserreinigung werden schwer abbaubare Stoffe durch partielle Oxidation derart verändert, daß sie mit einem nachgeschalteten weiteren Verfahrensschritt besser aus dem Abwasser entfernt werden können. Zur Anwendung von Ozon und zum Reaktionsmechanismus sei auf die zusammenfassende Darstellung des Verbandes der Chemischen Industrie e.V. in Verfahrensberichte Abwasserreinigung, 8. Bericht: "Abwasserreinigung durch Ozonisierung", Frankfurt 1978 verwiesen.

In der Praxis der Industrie-Abwasser-Reinigung hat im wesentlichen die Behandlung cyanid- und phenolhaltiger Abwässer mit Ozon Bedeutung erlangt, jedoch sind auch Verfahren zum Abbau von Farbstoffen, nitrierten Aromaten, Bleitetraäthyl und Pestiziden bekanntgeworden. Bei der Trinkwasseraufbereitung bietet gerade Ozon den Vorteil, daß es nicht nur geschmacks- und geruchsneutral desinfiziert, sondern auch bei genügend langer Einwirkung bestimmte Verunreinigungen abbaut (P. Joy et al. Untersuchungen über die Wirkung des Ozons auf Alkylbenzolsulfonsäuren und Waschmittel in wässriger Lösung, in: K. Aurand et al.: "Organische Verunreinigungen in der Umwelt", Berlin 1978).

Die Haloformbelastung von Trinkwasser, die bei der üblichen Chlorung zum größten Teil auf an sich harmlose organische Verbindungen, etwa Huminstoffe, zurückgeht, wird durch eine vorgeschaltete Ozonung erheblich vermindert.

Ferner ist es auch zum Stand der Technik bekannt geworden, daß der Einsatz von Ozon bei gleichzeitiger UV-Bestrahlung organische Lösungsmittelreste weitgehend abbaut.

Bei einer hinreichenden Reaktionsfähigkeit und -dauer führt die Einwirkung von Ozon auf organische Verbindungen schließlich zum Kohlendioxid. Im allgemeinen verläuft die Reaktion über eine Vielzahl von Zwischenstufen, in denen organische Verbindungen in unterschiedlichen Oxidationsstufen auftreten, die zum Teil langsamer als die Ausgangsverbindungen abgebaut werden.

Ferner ist es zum Stand der Technik bekannt, daß die Wirkung des Ozons durch Schnellvermischung, Ultraschalleinwirkung, UV-Bestrahlung oder auch durch Katalysatoren verstärkt werden kann. Neben den homogenen sind auch heterogene Katalysatorsysteme entwickelt worden, vergleiche zum Beispiel DE—OS—2647 341.

Bei besonders schwer abbaubaren Verbindungen, wie zum Beispiel TNT-haltigen Abwässern ist die Ozonung allein nicht ausreichend wirksam. Bei der Ozon-Oxidation von mit Lösungsmitteln verunreinigtem Wasser entstehen toxische Oxidationsprodukte, die eine Wiederverwendung des Wassers als Trinkwasser ausschließen.

Gerade beim Trinkwasser, das aus industriell belasteten Flüssen gewonnen wird, die eine Vielzahl ökotoxischer und schwer abbaubarer Stoffe, wie zum Beispiel Tenside und halogenierte Kohlenwasserstoffe enthalten, werden extreme Anforderungen an die Reinheit des behandelten Wassers gestellt, die nur im begrenzten Umfang erfüllt werden können. Obwohl Ozon das wirksamste in der Wassertechnik verwendete Oxidationsmittel ist, gibt es viele Verbindungen, die gegen Ozoneinwirkungen beständig sind (H. Bauch und H. Burchardt in Wasser, Luft und Betrieb 14, 1970). Unter den für die Wasseraufbereitung typischen Bedingungen wurden Verbindungen wie DDT, Aldrin, Dieldrin, Endosulfan und Chlordan nicht angegriffen.

Während die mit UV-Bestrahlung und Ultraschall arbeitenden Ozonungsverfahren sehr aufwendig und kostenintensiv sind, macht es sich bei den katalytischen Ozonisierungsverfahren nachteilig bemerkbar, daß die heterogenen Katalysatoren gegen Ozon nicht sehr beständig sind und ihre Wirksamkeit rasch abnimmt.

Aufgrunddessen liegt der Erfindung die Aufgabe zugrunde, einen wirtschaftlichen Katalysator herzustellen, der für die Ozonung niedermolekularer organischer Stoffe geeignet ist und seine katalytische Aktivität auch bei längerem Gebrauch nicht verliert.

Die Aufgabe wird erfindungsgemäß dadurch gelöst, daß auf ein Trägermaterial in Form von Raschigringen eine Silicongummi-Beschichtung aufgebracht und im Stickstoffstrom bei ca. 480°C getempert und partiell zu Silicagel mineralisiert wird. Dabei werden die Raschigringe vorzugsweise aus Silicongummi hergestellt. Das Aufbringen des Silicongummis kann durch Polymerisation in der Gasphase erfolgen.

Der erfindungsgemäß hergestellte Katalysator vermeidet sämtliche Nachteile des Standes der Technik und ist hervorragend für die Ozonung geeignet. In den Fällen, in denen eine ausreichende Abtrennung der organischen Verunreinigungen durch Luftstrippen, Umkehrosmose oder Extraktion nicht mehr ausreicht, ermöglicht erst der erfindungsgemäße Katalysator den Abbau und hilft zusätzliche noch, letzteren zu beschleunigen, ohne daß er dabei in seiner Struktur verändert wird und seine Katalysatorwirkung verliert. Darüber hinaus reagiert er auch nicht mit dem Ozon und katalysiert auch nicht dessen Zersetzung, wie dies zum Beispiel bei der Aktivkohle der Fall ist.

Zum Stande der Technik ist zu erwähnen, daß aus der DE—AS—24 40 181 bereits ein Verfahren zur Ozonung von Flüssigkeiten bekanntgeworden ist, bei dem poröse Trägerfeststoffteilchen mit Ozon beladen und der zu ozonisierenden Flüssigkeit zugeführt werden. Das in den Poren des Feststoffs enthaltens Ozon wird dabei an die Flüssigkeit abgegeben. Nach Verbrauch des Ozons werden die Trägerfeststoffteilchen erneut mit Ozon beladen.

Im folgenden wird die vorliegende Erfindung anhand der Zeichnung in Verbindung mit verschiedenen Versuchsbeispielen näher beschrieben, wobei jedes Merkmal von erfinderischer Bedeutung sein kann.

Es zeigt:

Fig. 1 die Begasung eines stark verdünnten Lösungsmittelgemisches mit Luft, Sauerstoff und Ozon;

Fig. 2 die Begasung eines stark verdünnten Lösungsmittelgemisches in einer mit Raschig-Ringen aus Glas gefüllten Füllkörperkolonne von 1100 ml Volumen gemäß Fig. 1 Nr. 2;

Fig. 3 die Ozon-Oxidation an Silicagel- bzw. Kieselgel-Füllkörpern im Vergleich zur Begasung mit Sauerstoff allein;

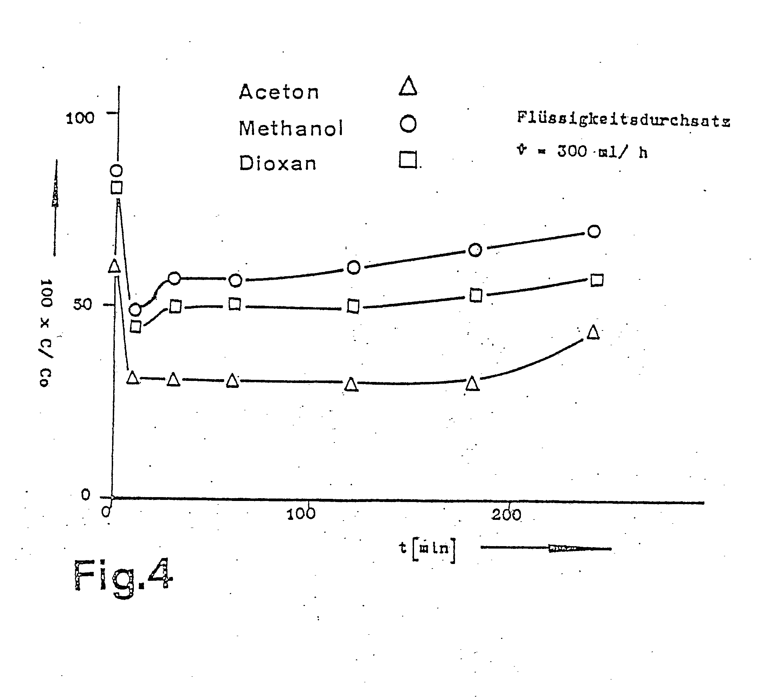

Fig. 4 die Ozon-Oxidation an beschichteten Füllkörpern;

Fig. 5 die Ozon-Oxidation an Füllkörper aus Pyrolyse-Silikat und

Fig. 6 Spektren und Gaschromatogramme in Wasser gelöster organischer Verbindungen nach Ozon-Begasung in Gegenwart eines Katalysators im Vergleich zur Ozonung allein.

Beispiel 1

Es wurden 5 Versuchslösungen hergestellt, die in einem Liter Wasser 295 mg Dioxan, 113 mg Aceton, 91 mg Methanol und 500 mg Formamid enthalten. Diese Lösungen werden entsprechend

1 mit Luft begast (15 Nl/h)
2 mit Ozon begast (1,6 Vol% in 15 Nl $O_2$/h)
3 mit Ozon begast (1,6 Vol% in 15 Nl $O_2$/h), wobei ein eisenoxidhaltigen Katalysator, bestehend aus 96,7% Aluminiumoxid, zugesetzt wurde
4 mit Ozon begast (1,6 Vol% in 15 Nl $O_2$/h) in Gegenwart von Silicagel (Korngröße 1,5 bis 3 mm)
5 mit Luft begast, jedoch 12 m³/h.

Die Ozonbegasung wurde mit einem handelsüblichen Ozongenerator in einer Waschflasche bei 22°C eine Stunde lang jeweils durchgeführt.

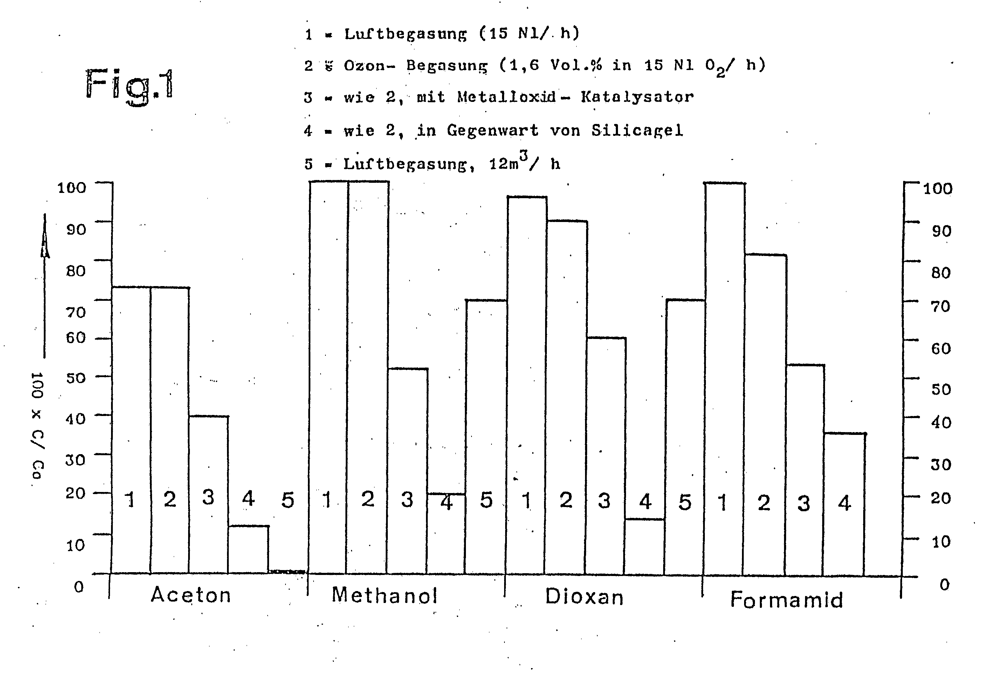

In Fig. 1 werden graphisch die nach Begasung der jeweiligen Versuchslösungen noch vorhandenen, auf die Anfangskonzentrationen bezogenen Restkonzentrationen gezeigt. Lediglich Aceton wurde zu etwa 26% bereits durch Luftbegasung abgetrennt (1), während Methanol, Dioxan und Formamid durch Luftbegasung nur dann etwas bzw. ganz entfernt werden können, wenn ein extrem erhöhter Luftstrom von 12 m³/h verwendet wird (5).

Unter den gewählten Versuchsbedingungen wird das Lösungsmittelgemisch von Ozon allein (2) nur wenig angegriffen.

Die reaktionsbeschleunigende Wirkung des Eisenoxid-Katalysators geht deutlich aus dem Schaubild hervor (3). Diese wird jedoch durch den erfindungsgemäßen Silicagel-Katalysator übertroffen (4). Es zeigt sich also, daß die katalytische Ozonung erfindungsgemäß noch weiter verbessert werden konnte, wobei die Verbesserung gegenüber der Katalyse durch Metalloxid im Bereich von 20 bis etwa 50% liegt. Besonders deutlich fällt dieses beim Dioxan auf.

Beispiel 2

Es wurde eine Versuchslösung hergestellt, die in 1 Liter Wasser 591 mg Dioxan, 227 mg Aceton und 182 mg Methanol enthält. Diese Lösung wurde durch eine in Gegenstrom mit ozonhaltigem Sauerstoff, wie er im Beispiel 1 verwendet wurde, begaste Füllkörperpackung mit den folgenden jeweils verschiedenen Katalysatormaterialien geleitet:

1.) Eisenoxidhaltiger Katalysator, bestehend aus 96,7% $Al_2O_3$, 1,94% $Fe_2O_3$ und 1,63% $SiO_2$
2.) Silicagel, Korngröße 1,5-3 mm,
3.) Raschig-Ringe aus Glas,
4.) mit Silicagel beschichtete Füllkörper, wobei poröses Tonmaterial unter Vakuum mit Wasserglas getränkt wurde.
Durch Eintauchen der Tonstücke in heiße verdünnte Salzsäure bildete sich dann eine fest haftende Schicht von Siliziumdioxid,
5.) Raschig-Ringe aus Pyrolyse-Silikat bzw. aus bei 480°C ca. 20 min. lang unter Stickstoff kalzinierten Siliconschlauch-Abschnitten.

Der Flüssigkeitsdurchsatz bei den einzelnen Versuchen betrug 300 ml/h. Anschließend wurden die noch verbleibenden Restkonzentrationen an Methanol, Aceton und Dioxan gaschromatographisch bestimmt.

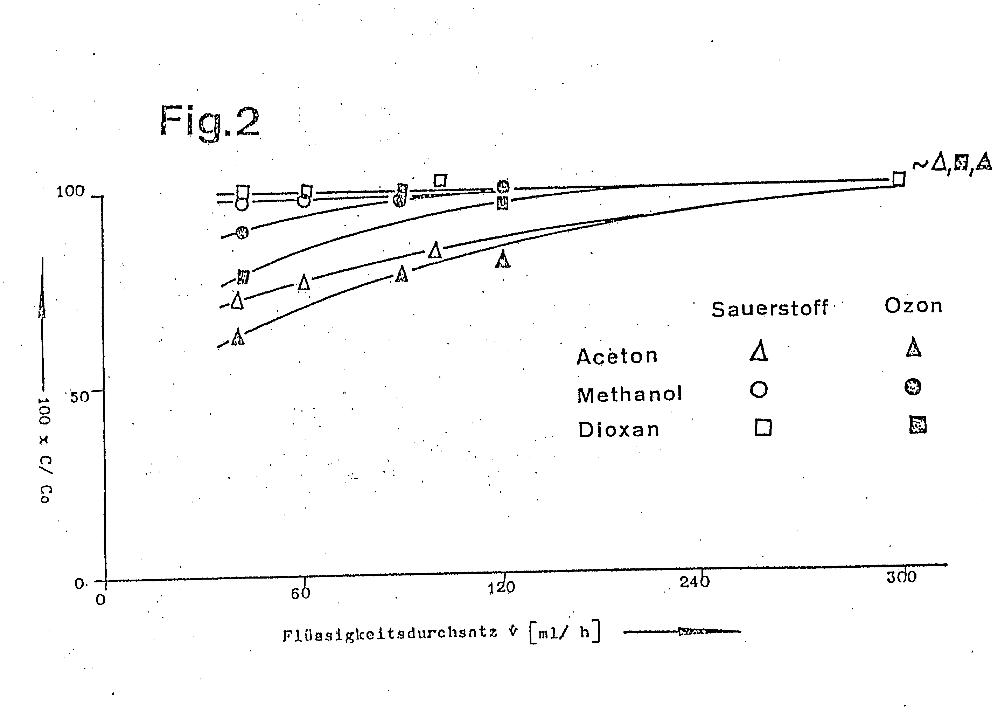

Die Ergebnisse des Versuches mit den unter 3 erwähnten Raschig-Ringen aus Glas sind in Fig. 2 festgehalten. Aus diesem Schaubild geht hervor, daß bei einem Flüssigkeitsdurchsatz von ca. 300 ml/h noch keine meßbare Konzentrationsabnahme von Methanol, Aceton und Dioxan feststellbar ist.

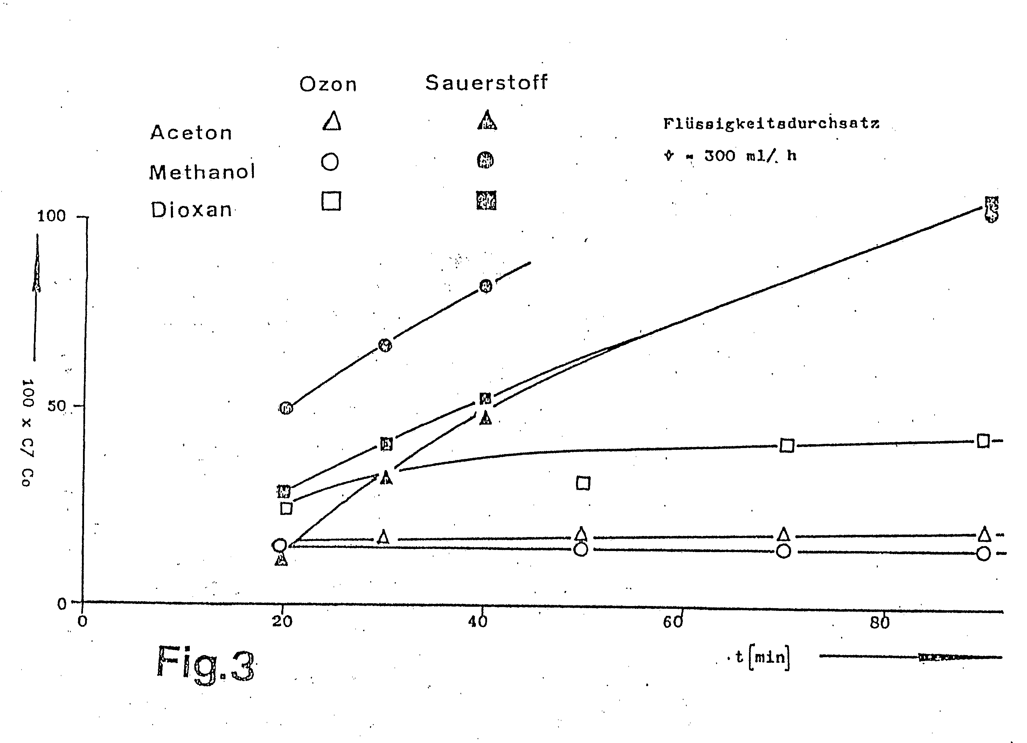

Die Ergebnisse des Versuches mit dem unter 4 erwähnten Füllkörper, die mit Silicagel beschichtet sind, sind in Fig. 3 aufgeführt. Während beim Passieren dieser Kieselgel-Packung lediglich eine minimale Adsorption von Aceton festgestellt werden konnte, stellten sich bei der Begasung mit Ozon auf Dauer erheblich unter den Ausgängswerten liegende Restkonzentrationen ein (Aceton 15%, Methanol 15%, Dioxan 40% der Ausgangskonzentration).

Auch diese Ergebnisse zeigen also, daß mit den silicagelbeschichteten Körpern ebenfalls eine lang anhaltende Verminderung der Konzentration der Lösungsmittel erreicht wird (Fig.

4). Nach fast vier Stunden nahm die katalytische Wirkung jedoch etwas ab, konnte dann aber durch Regenerieren mit einem trockenen Ozonstrom wieder hergestellt werden.

Entsprechende Vergleichsversuche mit Aktivkohle zeigten zwar erst nach Durchlauf von 144 l der Lösung ein Erschöpfen der Adsorptionskapazität, jedoch bewirkte die Begasung mit Ozon keine Abnahme der Lösungsmittelkonzentration.

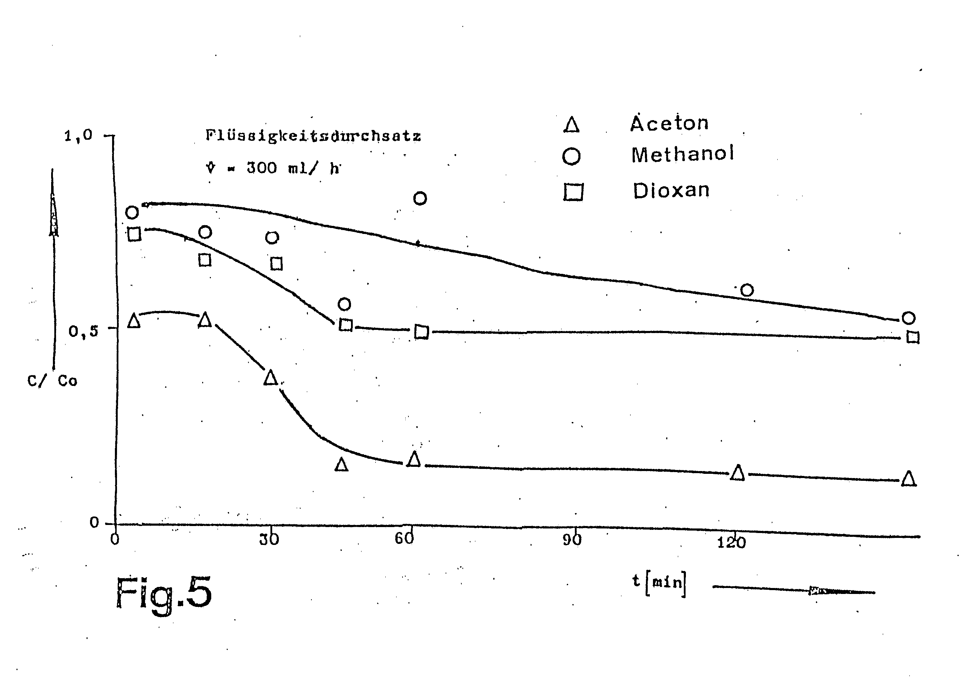

Die Ergebnisse des Versuches mit dem unter 5 bezeichneten Katalysator aus Pyrolyse-Silikat sind in Fig. 5 angegeben. Zunächst wurde festgestellt, daß die Wirkung der Füllkörper nicht nur Stunden, sondern sogar einige Tage lang erhalten bleibt. Ferner wurde beim Ozonungsversuch eine dauerhafte Konzentrationsverminderung der Ausgangssubstanzen erreicht, wie aus dem Schaubild ersichtlich ist.

Beispiel 3

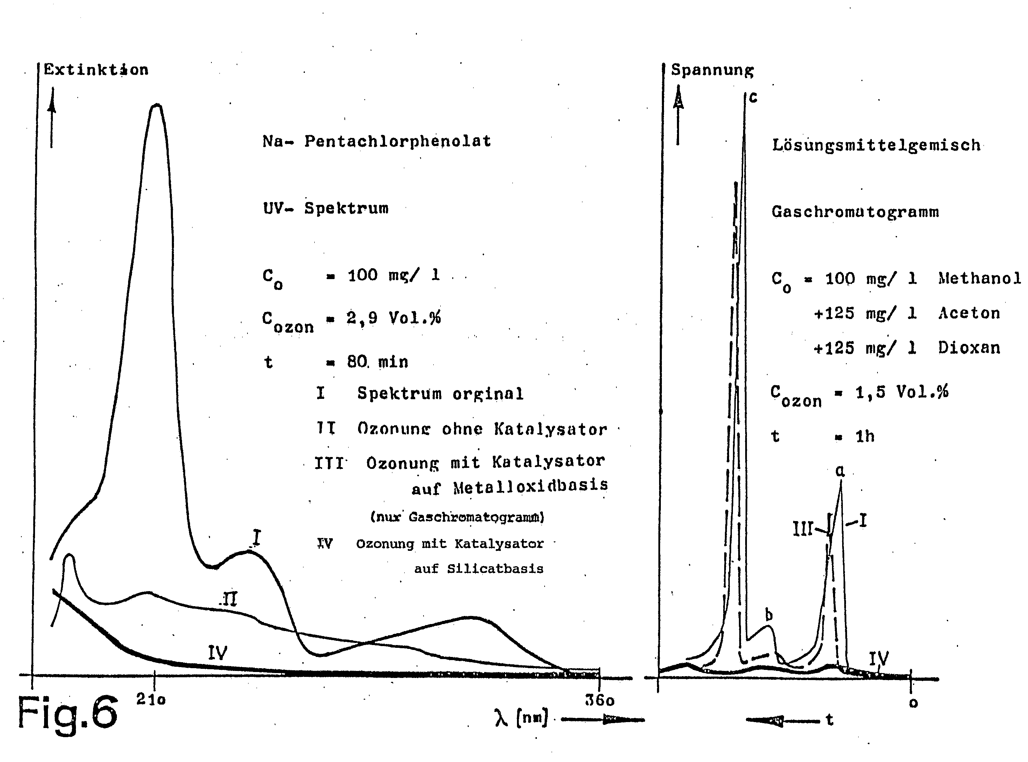

Eine wässrige Lösung mit 100 mg/l Natrium-Pentachlorphenolat, sowie das Lösungsmittelgemisch aus Beispiel 2 wurden durch eine im Gegenstrom mit ozonhaltigem Sauerstoff (wie in den vorangehenden Beispielen) begaste Füllkörperpackung mit Pyrolyse-Silikat-Ringen geleitet. Anschließend wurden von der Lösung UV-Spektren bzw. Gaschromatogramme aufgenommen, welche in Fig. 6 (IV) abgebildet sind. Zum besseren Vergleich sind sowohl die Original-UV-Spektren und Gaschromatogramme des ursprünglichen Lösungsmittelgemisches (I) als auch die Spektren nach einer Ozonung ohne Katalysator (II) angegeben. Nach Ozonung mit Katalysator auf Metalloxidbasis erhält man des Gaschromatogramm (III).

Die hervorragende Eignung des erfindungsgemäßen Katalysators und des Verfahrens gemäß der vorliegenden Erfindung ist aufgrund der äußerst geringen Restkonzentrationswerte leicht zu ersehen. Der Abbau der als Modellsubstanz für Organo-Halogen-Verbindungen eingesetzten Verbindung Natrium-Pentachlorphenolat wurde durch Pyrolyse-Silicat also deutlich gefördert. Nicht zuletzt wegen dieser äußerst geringen Restkonzentrationswerte eignet sich das erfindungsgemäße Verfahren insbesondere Zur Herstellung von Katalysatoren zur Trinkwasseraufbereitung.

**Patentansprüche**

1. Verfahren zum Herstellen von Katalysatoren für die Oxidation organischer Stoffe durch Ozon, insbesondere für die Ozonung von Abwasser mit organischen Verunreinigungen, dadurch gekennzeichnet, daß auf ein Trägermaterial in Form von Raschigringen eine Silicongummi-Beschichtung aufgebracht und im Stickstoffstrom bei ca. 480°C getempert und partiell zu Silicagel mineralisiert wird.

2. Verfahren nach Anspruch 1, dadurch gekennzeichnet, daß die Raschigringe aus Silicongummi hergestellt werden.

3. Verfahren nach Anspruch 1, dadurch gekennzeichnet, daß das Aufbringen des Silicongummis durch Polymerisation in der Gasphase erfolgt.

4. Verfahren nach Anspruch 1, dadurch gekennzeichnet, daß die Temperung des mit Silicongummi-Beschichtung versehenen Trägermaterials bei etwa 480°C über eine Zeit von etwa 20 Minuten durchgeführt wird.

**Revendications**

1. Procédé de préparation de catalyseurs pour l'oxydation de substances organiques par l'ozone, plus particulièrement pour l'ozonation d'eaux usées renfermant des impuretés organiques, procédé caractérisé en ce qu'on applique un revêtement en caoutchouc siliconique sur une matière support se présentant sous la forme d'anneaux Raschig, on le cuit à environ 480°C dans un courant d'azote et on le minéralise ainsi partiellement en gel de silice.

2. Procédé selon la revendication 1, caractérisé en ce que les anneaux Raschig sont fabriqués avec un caoutchouc siliconique.

3. Procédé selon la revendication 1, caractérisé en ce que l'application du caoutchouc siliconique est effectuée par polymérisation en phase gazeuse.

4. Procédé selon la revendication 1, caractérisé en ce que la cuisson de la matière support munie du revêtement en caoutchouc siliconique est effectuée à environ 480°C pendant une durée d'environ 20 minutes.

**Claims**

1. A method of producing catalysts for the oxidation of organic substances by ozone, particularly for the ozonizing of sewage containing organic impurities, characterised in that a carrier substance in the form of Raschig rings is provided with a silicone-rubber coating and is annealed in a stream of nitrogen at about 480°C and partially mineralized into silica gel.

2. A method as claimed in Claim 1, characterised in that the Raschig rings are made of silicone rubber.

3. A method as claimed in Claim 1, characterised in that the silicone-rubber coating is effected by polymerization in the gas phase.

4. A method as claimed in Claim 1, characterised in that the annealing of the carrier substance coated with silicone rubber is carried out at about 480°C over a time of about 20 minutes.

Fig.1

1 = Luftbegasung (15 Nl/ h)

2 = Ozon- Begasung (1,6 Vol.% in 15 Nl $O_2$/ h)

3 = wie 2, mit Metalloxid- Katalysator

4 = wie 2, in Gegenwart von Silicagel

5 = Luftbegasung, $12m^3$/ h

0 038 402

Fig.2

|                | Sauerstoff | Ozon |
|----------------|:----------:|:----:|
| Aceton         | △          | ◮    |
| Methanol       | ○          | ◉    |
| Dioxan         | □          | ▦    |

100 x C/ C₀

Flüssigkeitsdurchsntz V̇ [ml/ h]

0 038 402

Fig.3

Fig.4

Fig.5

0 038 402

Extinktion

Na- Pentachlorphenolat

UV- Spektrum

$C_0$ = 100 mg/ 1

$C_{ozon}$ = 2,9 Vol.%

t = 80 min

I Spektrum orginal

II Ozonung ohne Katalysator

III Ozonung mit Katalysator auf Metalloxidbasis

(nur Gaschromatogramm)

IV Ozonung mit Katalysator auf Silicatbasis

Spannung

Lösungsmittelgemisch

Gaschromatogramm

$C_0$ = 100 mg/ 1 Methanol
+125 mg/ 1 Aceton
+125 mg/ 1 Dioxan

$C_{ozon}$ = 1,5 Vol.%

t = 1h

Fig.6

210     360     $\lambda$ [nm]

t

0 038 402